# FASCICULE DE BREVET EUROPEEN

(11) **EP 1 176 335 B1**
(45) Date de publication et mention de la délivrance du brevet: **06.05.2004**
(21) Numéro de dépôt: 01401960.8
(22) Date de dépôt: 20.07.2001
(51) Int. Cl.: F16F 13/10

(54) **Procédé de fabrication d'un support anti-vibratoire hydraulique**
Herstellungsverfahren von einem hydraulischen, schwingungsdämpfenden Lager
Manufacturing process of an hydraulic antivibration support

(30) Priorité: 28.07.2000 FR 0009955
(43) Date de publication de la demande: 30.01.2002
(73) Titulaire: HUTCHINSON, 75008 Paris (FR)
(72) Inventeur: Guillemot, Thierry, 28200 Chateaudun (FR)
(74) Mandataire: Burbaud, Eric

(56) Documents cités:
- FR-A- 2 593 868
- US-A- 4 893 797
- US-A- 5 411 243
- PATENT ABSTRACTS OF JAPAN vol. 1996, no. 12, 26 décembre 1996 (1996-12-26) & JP 08 200434 A (TOKAI RUBBER IND LTD), 6 août 1996 (1996-08-06)
- PATENT ABSTRACTS OF JAPAN vol. 1998, no. 14, 31 décembre 1998 (1998-12-31) & JP 10 246277 A (TOKAI RUBBER IND LTD), 14 septembre 1998 (1998-09-14)

## Description

La présente invention est relative aux procédés de fabrication de supports antivibratoires hydrauliques destinés à être interposés, aux fins d'amortissement et de liaison, entre deux éléments rigides tels qu'un moteur et une caisse de véhicule. Elle vise également les supports obtenus par ces procédés.

L'invention concerne plus particulièrement, parmi ces supports, ceux qui comportent :
- des première et deuxième armatures rigides solidarisables respectivement avec les deux éléments rigides à réunir,
- un corps en élastomère pour relier entre elles les deux armatures et délimiter partiellement une chambre de travail remplie de liquide,
- une chambre de compensation délimitée partiellement par une paroi souple aisément déformable,
- une cloison rigide pour séparer la chambre de travail et la chambre de compensation en délimitant un passage étranglé qui fait communiquer lesdites chambres l'une avec l'autre, la cloison rigide comportant une coque rigide évidée qui présente des première et deuxième faces, la première face de la coque rigide étant orientée vers l'une des deux chambres, dite première chambre, tandis que la deuxième face de la cloison rigide est orientée vers l'autre des deux chambres, dite deuxième chambre.

Un tel support antivibratoire hydraulique est décrit par exemple dans le document FR 2 593 868.

Ces supports antivibratoires hydrauliques de l'art antérieur donnent entière satisfaction et permettent d'amortir très efficacement notamment les vibrations de relativement grande amplitude et de relativement basse fréquence telles que celles dues au "hachis" engendré sur le véhicule par les cahots dus à la route. En particulier, l'efficacité de ces supports antivibratoires est optimale pour une fréquence de vibrations correspondant à la résonance de la colonne de liquide contenue dans le passage étranglé, fréquence qui dépend des dimensions géométriques dudit passage étranglé et notamment du rapport entre la longueur curviligne et le diamètre équivalent de ce passage étranglé.

Cette particularité oblige toutefois à multiplier les types de fabrication, notamment de la cloison rigide dans laquelle est délimité le passage étranglé, lorsqu'on souhaite modifier la fréquence de calage du support antivibratoire, par exemple entre deux modèles d'un même véhicule. Cette absence de standardisation conduit à augmenter le prix de revient du support antivibratoire.

La présente invention a notamment pour but de pallier cet inconvénient.

A cet effet, l'invention propose un procédé pour fabriquer des supports antivibratoires hydrauliques appartenant à au moins des premier et deuxième groupes de supports présentant respectivement des première et deuxième fréquences de calage et étant destinés à être interposés entre deux éléments rigides à réunir, ce procédé comportant les opérations consistant à fournir et assembler :
- des première et deuxième armatures rigides solidarisables respectivement avec les deux éléments rigides à réunir,
- un corps en élastomère pour relier entre elles les deux armatures et délimiter partiellement une chambre de travail remplie de liquide,
- une chambre de compensation délimitée partiellement par une paroi souple aisément déformable,
- une cloison rigide pour séparer la chambre de travail et la chambre de compensation en délimitant un passage étranglé qui fait communiquer lesdites chambres l'une avec l'autre, la cloison rigide comportant une coque rigide évidée qui présente des première et deuxième faces, la première face de la coque rigide étant orientée vers l'une des deux chambres, dite première chambre, tandis que la deuxième face de la cloison rigide est orientée vers l'autre des deux chambres, dite deuxième chambre, ce procédé étant caractérisé par le fait qu'il comporte les étapes suivantes :
   a) fabriquer des coques rigides toutes identiques, avec une première gorge et une deuxième gorge, indépendante de la première gorge, lesdites gorges étant évidées dans la première face de la cloison rigide et communiquant avec la première chambre et avec la deuxième chambre à travers au moins une ouverture ménagée dans la coque rigide,
   b) fabriquer des plaques de fermeture adaptées pour s'appliquer de façon sensiblement étanche contre la première face des coques rigides en recouvrant les première et deuxième gorges, pour délimiter au moins partiellement le passage étranglé, les plaques de fermeture étant réparties au moins en des premier et deuxième groupes, les plaques de fermeture du premier groupe comportant un évidement disposé en correspondance avec la première gorge des coques rigides et comportant uniquement une partie pleine en correspondance avec la deuxième gorge des coques rigides de façon à isoler cette deuxième gorge, et les plaques de fermeture du deuxième groupe comportant chacune un évidement qui est disposé en correspondance avec au moins la deuxième gorge des coques rigides,
   c) réaliser un premier groupe de supports antivibratoires en associant les coques rigides aux plaques de fermeture du premier groupe, et un deuxième groupe de supports antivibratoires en associant les coques rigides aux plaques de fermeture du deuxième groupe.

Grâce à ces dispositions, il est possible de standardiser la fabrication de la coque rigide formant l'essentiel de la cloison qui sépare les chambres de travail et de compensation : pour modifier la fréquence de calage d'un support antivibratoire donné, par exemple afin de s'adapter à une motorisation différente d'un même véhicule, il suffit de modifier uniquement la plaque de fermeture de la cloison rigide de façon que cette plaque de fermeture fasse communiquer la première chambre avec soit la seule première gorge, soit les première et deuxième gorges, soit éventuellement la seule deuxième gorge si elle présente des dimensions différentes de la première gorge.

Dans des modes de réalisation préférés de l'invention, on peut éventuellement avoir recours en outre à l'une et/ou à l'autre des dispositions suivantes :
- les plaques de fermeture du deuxième groupe comporte chacune un évidement qui est disposé en correspondance avec la première et la deuxième gorges des coques rigides ;
- on forme des grilles respectivement dans la coque rigide et dans la plaque de fermeture ;
- on forme un logement central, dans la coque rigide, qui communique avec les première et deuxième chambres, par l'intermédiaire des grilles ;
- on forme les première et deuxième gorges pour qu'elles soient concentriques autour du logement central ;
- on dispose, dans le logement central, un clapet de découplage souple ;
- la deuxième gorge communique avec la première chambre à travers la plaque de fermeture, les première et deuxième gorges formant ensemble au moins partiellement le passage étranglé ;
- l'évidement de la plaque de fermeture qui fait communiquer la première gorge avec la première chambre, fait également communiquer la deuxième gorge avec ladite première chambre ;
- les première et deuxième gorges communiquent avec la deuxième chambre par l'intermédiaire de ladite ouverture ;
- la première chambre est constituée par la chambre de travail et la deuxième chambre est constituée par la chambre de compensation ;
- le corps en élastomère présente une forme de cloche s'étendant entre un sommet solidaire de la première armature et une base annulaire solidaire de la deuxième armature, ladite base annulaire du corps en élastomère étant appliquée de façon étanche contre une périphérie de la plaque de fermeture de la cloison rigide ;
- les première et deuxième gorges s'étendent sensiblement parallèlement l'une à l'autre sur la première face de la coque rigide, lesdites gorges s'étendant respectivement entre des premières extrémités disposées dans une portion pleine de la cloison rigide et des deuxièmes extrémités communiquant avec la deuxième chambre, les deux gorges étant séparées l'une de l'autre par une cloison pleine et continue qui se raccorde à ladite partie pleine vers les premières extrémités des deux gorges et qui s'étend jusqu'aux deuxièmes extrémités desdites deux gorges, ladite cloison étant en contact sensiblement étanche avec la plaque de fermeture entre les premières et deuxièmes extrémités des deux gorges ; et
- la coque rigide comporte en outre un logement central dans lequel est disposé un clapet de découplage souple qui communique avec les première et deuxième chambres par l'intermédiaire de grilles ménagées respectivement dans la coque rigide et dans la plaque de fermeture, les première et deuxième gorges étant disposées concentriquement autour du logement du clapet.

D'autres caractéristiques et avantages de l'invention apparaîtront au cours de la description détaillée suivante de deux de ses formes de réalisation, données à titre d'exemples non limitatifs, en regard des dessins joints.

Sur les dessins :
- la figure 1 est une vue en coupe axiale d'un support antivibratoire hydraulique selon une première forme de réalisation de l'invention,
- la figure 2 est une vue de dessus de la coque rigide formant la partie inférieure de la cloison qui sépare les chambres de travail et de compensation du support antivibratoire de la figure 1,
- la figure 3 est une vue de dessus de la cloison du support antivibratoire de la figure 1,
- et la figure 4 est une vue de dessus de la cloison du support antivibratoire, dans une deuxième forme de réalisation de l'invention.

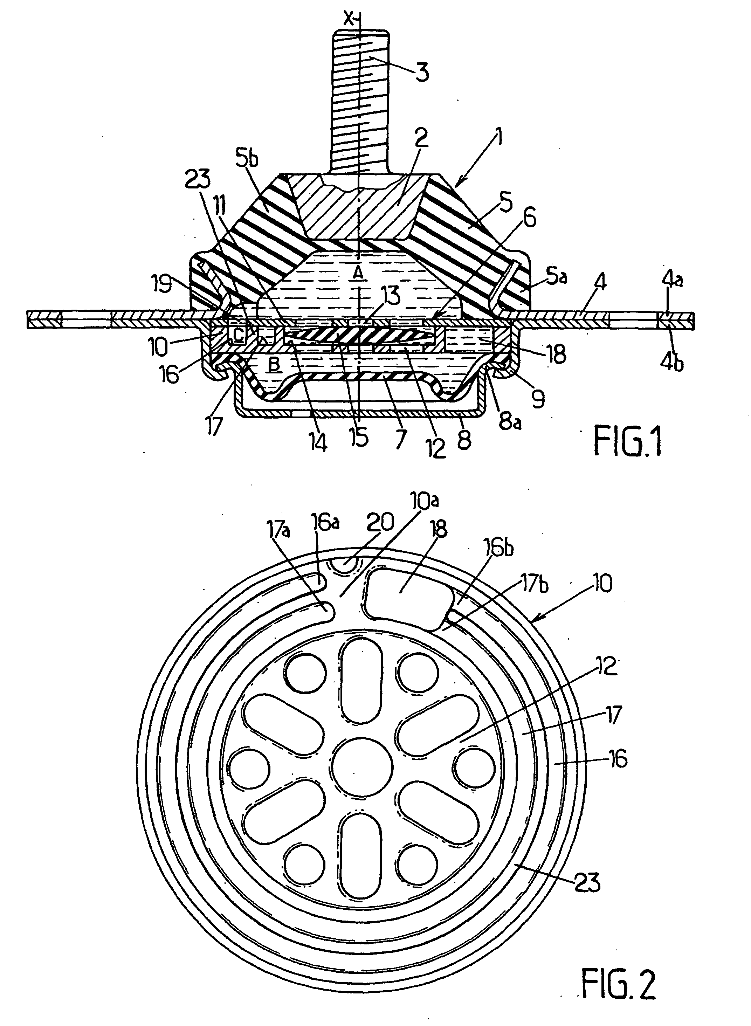

Le support antivibratoire hydraulique 1 représenté sur la figure 1 comporte, de façon connue en soi :
- une embase métallique rigide 2 solidaire d'un goujon métallique 3 en attente dirigé vers le haut selon un axe vertical X,
- un anneau métallique rigide 4 centré sur l'axe X, cet anneau étant constitué ici par deux plaquettes annulaires 4a, 4b assemblées l'une contre l'autre par rivetage, soudage ou autre,
- un corps en élastomère 5 qui relie de façon étanche l'embase 2 à l'anneau 4 en étant adhérisé à ces deux pièces, ce corps en élastomère présentant une forme de cloche qui s'étend selon l'axe X entre d'une part, une base annulaire 5a solidaire de l'anneau 4 et d'autre part, un sommet 5b solidaire de l'embase 2, ce corps en élastomère étant constitué par une paroi suffisamment épaisse pour présenter une bonne résistance à la compression axiale, de façon à jouer un rôle de support lorsque l'embase 2 est reliée par exemple à une partie d'un moteur de véhicule automobile tandis que l'anneau 4 est relié à la caisse du véhicule,
- un soufflet 7 mince et flexible, qui est réalisé en élastomère et qui est relié de façon étanche à l'anneau 4, en délimitant un boîtier fermé avec cet anneau èt le corps en élastomère 5,
- une cloison métallique rigide 6, horizontale, qui subdivise le boîtier en deux chambres hydrauliques, savoir une chambre de travail A du côté du corps en élastomère 5 et une chambre de compensation B du côté du soufflet 7,
- un passage étranglé C, reliant en permanence les chambres A et B, ce passage étranglé étant ménagé dans le pourtour de la cloison rigide 6, les deux chambres ainsi que le passage étranglé étant rempli d'un liquide, le passage étranglé C permettant des transferts de liquide entre les chambres A et B lorsque l'embase 2 et l'anneau 4 sont soumis à des mouvements axiaux relatifs de basse fréquence (par exemple inférieure à 20 Hz) et de grande amplitude (par exemple supérieure à 0,5 mm), et ces mouvements vibratoires étant ainsi amortis par le passage étranglé C,
- un capot métallique rigide 8 qui recouvre le soufflet 7 de façon à le protéger, ce capot 8 comportant un rebord annulaire radial 8a qui est serré axialement contre la cloison 6 par un sertissage 9 d'une partie de l'anneau 4, le pourtour du soufflet 7 étant ainsi serré de façon étanche entre le rebord 8a du capot et le pourtour de la cloison rigide 6.

La cloison rigide 6 comporte une coque rigide 10 évidée, qui peut être notamment réalisée par moulage en alliage léger ou en matière plastique. Cette coque rigide 10 présente d'une part, une première face orientée vers la chambre de travail A et recouverte par une plaque de fermeture plane 11 réalisée par exemple en tôle d'acier, et d'autre part, une deuxième face orientée vers la chambre de compensation B.

Dans la première face de la coque rigide 10, est évidé un logement central 14 dans lequel est reçu un clapet 15 dit de "découplage", constitué par exemple par un disque d'élastomère monté flottant avec un faible jeu (par exemple de l'ordre de 0,5 mm) entre deux grilles 12, 13 ménagées l'une dans la deuxième façe de la coque rigide 10 et l'autre dans la plaque de fermeture 11, ces deux grilles communiquant respectivement avec la chambre de compensation B et avec la chambre de travail A. Le clapet 15 permet, de façon connue en soi, d'absorber des vibrations axiales de relativement grande fréquence (par exemple supérieure à 20 Hz) et de faible amplitude (par exemple inférieure à 0,5 mm) entre l'embase 2 et l'anneau 4.

Par ailleurs, comme on peut le voir sur la figure 2, deux gorges parallèles 16, 17 sont évidées dans la première face de la coque rigide 10. Chacune de ces gorges s'étend entre une première extrémité 16a disposée au niveau d'une partie pleine 10a de la coque rigide, jusqu'à une deuxième extrémité 16b, 17b qui débouche dans un évidement 18 ménagé dans la deuxième face de la coque rigide 10 et communiquant avec la chambre de compensation B. Les deux gorges 16, 17 sont indépendantes et séparées l'une de l'autre par une cloison 23 qui vient en contact sensiblement étanche avec la plaque de fermeture 11 sur toute sa longueur et qui s'étend depuis les premières extrémités 16a, 17a des deux gorges, où ladite cloison 23 se raccorde à la partie pleine 10a de la coque rigide, jusqu'aux deuxièmes extrémités 16b, 17b des deux gorges où lesdites gorges communiquent avec l'évidement 18.

Dans l'exemple particulier représenté sur les dessins, les deux gorges 16, 17 sont concentriques et entourent le logement central 14 qui,reçoit le clapet de découplage 15.

De plus, la plaque de fermeture 11 comporte, en dehors de la grille 13, une ouverture unique 19 disposée en correspondance avec la première gorge 16 et notamment avec la première extrémité 16a de cette gorge, de sorte que le passage étranglé C est constitué par ladite première gorge. Dans ce mode de réalisation, la deuxième gorge 17 est isolée de la chambre de travail A et ne joue aucun rôle.

On notera que le positionnement angulaire de la plaque de fermeture 11 par rapport à la coque rigide 10 peut être assuré notamment au moyen d'un bossage de détrompage 20 ménagé sur la première face de la coque rigide 10 et sur lequel s'emboîte un évidement correspondant 21 de la plaque de fermeture 19.

Dans la première forme de réalisation de l'invention, décrite ci-dessus, le passage étranglé C détermine ainsi une fréquence de calage du support antivibratoire, c'est-à-dire une fréquence d'amortissement maximum, qui est relativement basse, par exemple de l'ordre de 8 Hz.

Toutefois, grâce à la présence de la deuxième gorge 17 de la coque rigide 10, on peut utiliser le même support antivibratoire, en modifiant uniquement la plaque de fermeture 11, pour obtenir une fréquence de calage différente du support, en particulier pour augmenter cette fréquence de calage.

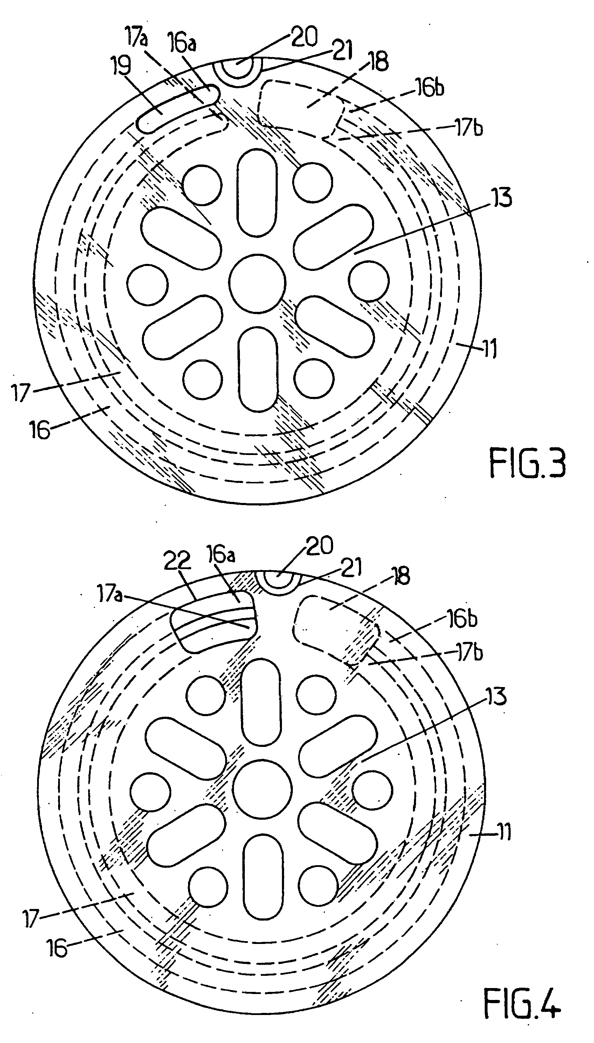

Ainsi, dans le mode de réalisation représenté sur la figure 4, l'évidement 19 de la plaque de fermeture 11 est remplacé par un évidement 22 plus large dans la direction radiale, qui fait communiquer à la fois les deux gorges 16, 17 avec la chambre de travail A, au niveau des premières extrémités 16a, 17a de ces gorges. Ainsi, le passage étranglé C est alors constitué par l'ensemble des gorges 16, 17, de sorte que le diamètre équivalent de ce passage étranglé est augmenté, ce qui augmente la fréquence de calage du support. A titre d'exemple non limitatif, la fréquence de calage peut ainsi être de l'ordre de 12 Hz dans l'exemple représenté.

On notera que, le cas échéant, si les gorges 16, 17 présentaient des sections droites différentes, il serait possible d'obtenir trois fréquences de calage différentes suivant que l'on fait communiquer uniquement la gorge 16, uniquement la gorge 17 ou les deux gorges 16, 17 avec la chambre de travail A.

## Revendications

1. Procédé pour fabriquer des supports antivibratoires hydrauliques appartenant à au moins des premier et deuxième groupes de supports présentant respectivement des première et deuxième fréquences de calage et étant destinés à être interposés entre deux éléments rigides à réunir, ce procédé comportant les opérations consistant à fournir et assembler :
- des première et deuxième armatures rigides (2,4) solidarisables respectivement avec les deux éléments rigides à réunir,
- un corps en élastomère (5) pour relier entre elles les deux armatures et délimiter partiellement une chambre de travail (A) remplie de liquide,
- une chambre de compensation (B) délimitée partiellement par une paroi souple (7) aisément déformable,
- une cloison rigide (6) pour séparer la chambre de travail (A) et la chambre de compensation (B) en délimitant un passage étranglé (C) qui fait communiquer lesdites chambres l'une avec l'autre, la cloison rigide (6) comportant une coque rigide évidée (10) qui présente des première et deuxième faces, la première face de la coque rigide (10) étant orientée vers l'une (A) des deux chambres, dite première chambre, tandis que la deuxième face de la cloison rigide (10) est orientée vers l'autre (B) des deux chambres, dite deuxième chambre,
ce procédé étant **caractérisé par le fait qu'**il comporte les étapes suivantes :
a) fabriquer des coques rigides (10) toutes identiques, avec une première gorge (16) et une deuxième gorge (17), indépendante de la première gorge (16), lesdites gorges (16,17) étant évidées dans la première face de la cloison rigide (10) et communiquant avec la première chambre (A) et avec la deuxième chambre (B) à travers au moins une ouverture (18) ménagée dans la coque rigide (10),
b) fabriquer des plaques de fermeture (11) adaptées pour s'appliquer de façon sensiblement étanche contre la première face des coques rigides (10) en recouvrant les première et deuxième gorges (16,17), pour délimiter au moins partiellement le passage étranglé (C), les plaques de fermeture (11) étant réparties au moins en des premier et deuxième groupes, les plaques de fermeture (11) du premier groupe comportant un évidement (19) disposé en correspondance avec la première gorge (16) des coques rigides et comportant uniquement une partie pleine en correspondance avec la deuxième gorge (17) des coques rigides de façon à isoler cette deuxième gorge, et les plaques de fermeture du deuxième groupe comportant chacune un évidement (22) qui est disposé en correspondance avec au moins la deuxième gorge (17) des coques rigides,
c) réaliser un premier groupe de supports antivibratoires en associant les coques rigides (10) aux plaques de fermeture (11) du premier groupe, et un deuxième groupe de supports antivibratoires en associant les coques rigides (10) aux plaques de fermeture (11) du deuxième groupe.

2. Procédé selon la revendication 1, dans lequel les plaques de fermeture (11) du deuxième groupe comporte chacune un évidement (22) qui est disposé en correspondance avec la première (16) et la deuxième (17) gorges des coques rigides (10).

3. Procédé selon l'une des revendications précédentes, dans lequel :
- on forme des grilles (12,13) respectivement dans la coque rigide (10) et dans la plaque de fermeture (11),
- on forme un logement central (14), dans la coque rigide (10), qui communique avec les première et deuxième chambres (A,B), par l'intermédiaire des grilles (12,13),
- on forme les première et deuxième gorges (16,17) pour qu'elles soient concentriques autour du logement central (14), et
- on dispose, dans le logement central (14), un clapet de découplage souple (15).

## Claims

1. Process for manufacturing hydraulic anti-vibration mounts belonging to at least a first group and a second group of mounts exhibiting a first and a second set frequency, respectively, and being designed to be inserted between two rigid elements that are to be connected together, this process comprising the operations of supplying and assembling:
- a first rigid part (2) and a second rigid part (4), each attachable to one of the two rigid elements to be connected together,
- an elastomeric body (5) for connecting together the two rigid parts and partially defining a liquid-filled working chamber (A),
- a compensating chamber (B) defined partially by a flexible, easily deformable wall (7),
- a rigid partition (6) for separating the working chamber (A) from the compensating chamber (B) while defining a restricted passage (C) allowing communication between the said chambers, the rigid partition (6) comprising a rigid recessed shell (10) having first and second faces, the first face of the rigid shell (10) being oriented toward one (A) of the two chambers, termed the first chamber, while the second face of the rigid partition (10) is oriented toward the other (B) of the two chambers, termed the second chamber,
this process being **characterized in that** it comprises the following steps:
a) manufacturing a plurality of rigid shells (10), all identical with each other, with a first groove (16) and a second groove (17) independent of the first groove (16), the said grooves (16, 17) being recessed in the first face of the rigid partition (10) and communicating with the first chamber (A) and with the second chamber (B) through at least one opening (18) formed in the rigid shell (10),
b) manufacturing a plurality of closing plates (11) designed to fit more or less leaktightly against the first face of the rigid shells (10) in such a way as to cover the first and second grooves (16, 17), in order at least partially to define the restricted passage (C), the closing plates (11) being divided into at least a first group and a second group, the closing plates (11) of the first group having a cavity (19) located over the first groove (16) of the rigid shells and having only a solid part over the second groove (17) of the rigid shells, thus isolating this second groove, and the closing plates of the second groove each having a cavity (22) that is located over at least the second groove (17) of the rigid shells,
c) producing a first group of anti-vibration mounts by attaching the rigid shells (10) to the closing plates (11) of the first group, and a second group of anti-vibration mounts by attaching the rigid shells (10) to the closing plates (11) of the second group.

2. Process according to Claim 1, in which the closing plates (11) of the second group each comprise a cavity (22) that is located over the first (16) and second (17) grooves of the rigid shells (10).

3. Process according to one of the preceding claims, in which:
- gratings (12, 13) are formed, one in the rigid shell (10) and the other in the closing plate (11),
- there is formed in the rigid shell (10) a central housing (14) that communicates with the first and second chambers (A, B), via the gratings (12, 13),
- first and second grooves (16, 17) are formed so as to be concentric about the central housing (14), and
- a flexible decoupling valve (15) is placed in the central housing (14).

## Patentansprüche

1. Verfahren zur Herstellung von hydraulischen, schwingungsdämpfenden Lagern, die zu wenigstens einer ersten und zweiten Gruppe von Lagern gehören, die jeweils eine erste und eine zweite Einstellungsfrequenz aufweisen und dazu bestimmt sind, zwischen zwei zusammenzufügenden starren Elementen eingesetzt zu werden, wobei folgendes vorgesehen und zusammengebaut wird:
- ein erstes und ein zweites starres Beschlagteil (2, 4), die jeweils mit einem der zwei zusammenzufügenden starren Elemente verbunden werden können,
- ein Körper (5) aus Elastomer, um die zwei Beschlagteile miteinander zu verbinden und teilweise eine Arbeitskammer (A) abzugrenzen, die mit Flüssigkeit gefüllt ist,
- eine Ausgleichskammer (B), die teilweise von einer flexiblen Wand (7) abgegrenzt wird, die ohne Schwierigkeit verformt werden kann,
- eine starre Trennwand (6), die die Arbeitskammer (A) und die Ausgleichkammer (B) trennt und einen schmalen Durchgang (C) begrenzt, über den die Kammern miteinander in Verbindung stehen, wobei die starre Trennwand (6) eine starre ausgehöhlte Schale (10) umfasst, die eine erste und eine zweite Seite aufweist, wobei die erste Seite der starren Schale (10) zu einer (A) der zwei Kammern hin ausgerichtet ist, die als erste Kammer bezeichnet wird, während die zweite Seite der starren Trennwand (10) zu der anderen (B) der zwei Kammern hin ausgerichtet ist, die als zweite Kammer bezeichnet wird,
wobei dieses Verfahren **dadurch gekennzeichnet ist, dass** es die folgenden Schritte umfasst:
a) das Herstellen von starren Schalen (10), die alle identisch sind, mit einer ersten Auskehlung (16) und einer zweiten Auskehlung (17), die von der ersten Auskehlung (16) unabhängig ist, wobei die Auskehlungen (16, 17) in der ersten Seite der starren Trennwand (10) vorgesehen sind und mit der ersten Kammer (A) und mit der zweiten Kammer (B) über wenigstens eine Öffnung (18) in Verbindung stehen, die in der starren Schale (10) ausgebildet ist,
b) das Herstellen von Schließplatten (11), die so ausgelegt sind, dass sie im wesentlichen dicht an der ersten Seite der starren Schalen (10) anliegen, indem sie die erste und die zweite Auskehlung (16, 17) bedecken, um wenigstens teilweise den engen Durchgang (C) abzugrenzen, wobei die Schließplatten (11) wenigstens auf eine erste und eine zweite Gruppe verteilt sind, wobei die Schließplatten (11) der ersten Gruppe eine Vertiefung (19) aufweisen, die in Entsprechung zu der ersten Auskehlung (16) der starren Schalen angeordnet ist und nur einen ebenen Teil in Entsprechung zu der zweiten Auskehlung (17) der starren Schalen umfasst, um diese zweite Auskehlung zu isolieren, und die Schließplatten der zweiten Gruppe jeweils eine Vertiefung (22) umfassen, die in Entsprechung zu wenigstens der zweiten Auskehlung (17) der starren Schalen angeordnet ist,
c) das Ausbilden einer ersten Gruppe von schwingungsdämpfenden Lagern, indem die starren Schalen (10) mit den Schließplatten (11) der ersten Gruppe verbunden werden, und einer zweiten Gruppe von schwingungsdämpfenden Lagern, indem die starren Schalen (10) mit den Schießplatten (11) der zweiten Gruppe verbunden werden.

2. Verfahren nach Anspruch 1, in dem die Schließplatten (11) der zweiten Gruppe jeweils eine Vertiefung (22) umfassen, die in Entsprechung zu der ersten (16) und der zweiten (17) Auskehlung der starren Schalen (10) angeordnet ist.

3. Verfahren nach einem der vorhergehenden Ansprüche, in dem:
- jeweils Gitter (12, 13) in der starren Schale (10) und in der Schließplatte (11) ausgebildet werden,
- eine zentrale Aufnahme (14) in der starren Schale (10) ausgebildet wird, die mit der ersten und der zweiten Kammer (A, B) über die Gitter (12, 13) in Verbindung steht,
- die erste und die zweite Auskehlung (16, 17) so ausgebildet werden, dass sie um die zentrale Aufnahme (14) konzentrisch verlaufen, und
- in der zentralen Aufnahme (14) eine nachgiebige Entkopplungs-Klappe (15) angeordnet wird.
